(19) Europäisches Patentamt
European Patent Office
Office européen des brevets

(11) Veröffentlichungsnummer: **0 340 512 B1**

(12) **EUROPÄISCHE PATENTSCHRIFT**

(45) Veröffentlichungstag der Patentschrift: **20.10.93**

(51) Int. Cl.$^5$: **H01G 9/02**

(21) Anmeldenummer: **89106824.9**

(22) Anmeldetag: **17.04.89**

Die Akte enthält technische Angaben, die nach dem Eingang der Anmeldung eingereicht wurden und die nicht in dieser Patentschrift enthalten sind.

# (54) Feststoff-Elektrolyte und diese enthaltende Elektrolyt-Kondensatoren.

(30) Priorität: **30.04.88 DE 3814730**

(43) Veröffentlichungstag der Anmeldung:
**08.11.89 Patentblatt 89/45**

(45) Bekanntmachung des Hinweises auf die Patenterteilung:
**20.10.93 Patentblatt 93/42**

(84) Benannte Vertragsstaaten:
**AT BE DE FR GB IT NL SE**

(56) Entgegenhaltungen:
**EP-A- 0 264 786**

**JOURNAL OF POLYMER SCIENCE, Band 18, 1980, Seiten 8-12, John Wiley & Sons; "Preparation of thermostable and electric-conducting poly(2,5-thienylene)"**

(73) Patentinhaber: **BAYER AG**

**D-51368 Leverkusen(DE)**

(72) Erfinder: **Jonas, Friedrich, Dr.**
**Krugenofen 15**
**D-5100 Aachen(DE)**
Erfinder: **Heywang, Gerhard, Dr.**
**Nittumer Weg 4**
**D-5060 Bergisch Gladbach 2(DE)**
Erfinder: **Schmidtberg, Werner**
**Am Thelenhof 35**
**D-5090 Leverkusen 1(DE)**

EP 0 340 512 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von bestimmten Polythiophenen als Feststoff-Elektrolyt in Elektrolyt-Kondensatoren und Elektrolyt-Kondensatoren, die diese Polythiophene als Feststoff-Elektrolyte enthalten.

Elektrolyt-Kondensatoren, die als Feststoff-Elektrolyte elektrisch leitfähige organische Verbindungen enthalten, sind bekannt (siehe z.B. die DE-OS 3 214 355 (= US-PS 4 580 855) und den in dieser beschriebenen Stand der Technik). Nachteilig an den in der DE-OS 3 214 355 als Feststoff-Elektrolyte beschriebenen TCNQ-Komplexen ist, daß sie erst bei Temperaturen verarbeitbar (schmelzbar) sind, bei denen bereits ihre Stabilitätsgrenze erreicht wird und daß sie im Laufe der Zeit Blausäure abspalten und deshalb toxisch und korrosiv wirken.

In der japanischen offengelegten Anmeldung Nr. 86/239 617 werden dotierte, durch oxidative Polymerisation von Alkyl- oder Alkoxyanilinen, z.B. 2,5-Dimethoxyanilin, erhaltene Polyalkyl- bzw. Polyalkoxyaniline und in der japanischen offengelegten Anmeldung Nr. 86/240 625 durch oxidative Polymerisation von Pyrrol in Gegenwart von Adipinsäure erhaltene Polypyrrole als Feststoff-Elektrolyte beschrieben. Die in den beiden japanischen Anmeldungen beschriebenen Verfahren zur Herstellung von Feststoff-Elektrolyten haben den Nachteil, daß sie nicht reproduzierbar sind. Aus EP-A-0 264 786 ist die Verwendung von Thiophen-Polymeren als Bestandteil des Festelektrolyten in Festkörper Kondensatoren bekannt.

Es wurde jetzt gefunden, daß sich durch oxidative Polymerisation von speziellen Thiophenen erhältliche Polythiophene besonders als Feststoff-Elektrolyte für Elektrolyt-Kondensatoren eignen. Diese speziellen Polythiophene lassen sich auf besonders einfache Weise ohne Beeinträchtigung ihrer Leitfähigkeit auf die als Anoden in Elektrolyt-Kondensatoren verwendeten Metallfolien haftfest aufbringen und ergeben Kondensatoren, die sich durch gute elektrische Eigenschaften, z.B. eine hohe, weitgehend frequenzunabhängige Kapazität, ferner durch niedrige dielektrische Verluste und geringe Leckströme, auszeichnen.

Die Erfindung betrifft daher die Verwendung von Polythiophenen, die aus Struktureinheiten der Formel

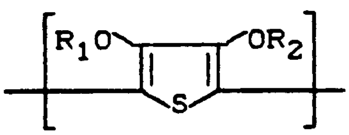 (I),

aufgebaut sind, in der

$R_1$ und $R_2$ zusammen einen gegebenenfalls substituierten $C_1$-$C_4$-Alkylen-Rest, vorzugsweise einen gegebenenfalls durch Alkylgruppen substituierten Methylen-, einen gegebenenfalls durch $C_1$-$C_{12}$-Alkyl- oder Phenylgruppen substituierten Ethylen-1,2-Rest oder einen Cyclohexylen-1,2-Rest bilden,

als Feststoff-Elektrolyte in Elektrolyt-Kondensatoren.

Für $R_1$ und $R_2$ seien als $C_1$-$C_4$-Alkylgruppen vor allem die Methyl- und Ethylgruppe genannt.

Als Vertreter der gegebenenfalls substituierten $C_1$-$C_4$-Alkylenreste, die $R_1$ und $R_2$ zusammen bilden können, seien vorzugsweise die Alkylen-1,2-Reste genannt, die sich von den 1,2-Dibrom-alkanen ableiten, wie sie beim Bromieren von $\alpha$-Olefinen, wie Ethen, Propen-1, Hexen-1, Octen-1, Decen-1, Dodecen-1 und Styrol erhältlich sind; außerdem seien genannt der Cyclohexylen-1,2-, Butylen-2,3-, 2,3-Dimethylen-butylen-2,3- und Pentylen-2,3-Rest. Bevorzugte Reste sind der Methylen-, Ethylen-1,2- und Propylen-1,2-Rest.

Die erfindungsgemäß zu verwendenden Polythiophene werden unmittelbar auf den als Anoden verwendeten, einseitig mit einer Oxidschicht bedeckten (z.B. eloxierten) Metallfolien, vorzugsweise Folien aus Aluminium, Niob oder Tantal, durch oxidative Polymerisation von 3,4-Dialkoxy-thiophenen der Formel

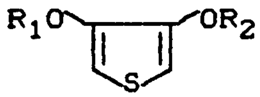 (II),

in der

$R_1$ und $R_2$ die unter Formel (I) angegebene Bedeutung haben,

erzeugt, indem man auf die mit der Oxidschicht bedeckte Seite der Metallfolie die Dialkoxythiophene der Formel (II) und die Oxidationsmittel, vorzugsweise in Form von Lösungen, entweder getrennt nacheinander oder, vorzugsweise, zusammen aufbringt und die oxidative Polymerisation, je nach Aktivität des verwendeten Oxidationsmittels, gegebenenfalls durch ein Erwärmen der Beschichtung zu Ende führt.

Die für die Herstellung der erfindungsgemäß zu verwendenden Polythiophene erforderlichen 3,4-Dialkoxy-thiophene der Formel (II) sind zum Teil bekannt oder nach im Prinzip bekannten Verfahren durch Umsetzung der Alkalisalze der 3,4-Dihydroxy-thiophen-2,5-dicarbonsäureester mit den entsprechenden Alkylhalogeniden oder Alkylen-dihalogeniden und nachfolgende Decarboxylierung der freien 3,4-Dialkoxy- oder (Alkylen-1,2-dioxy)-thiophen-2,5-dicarbonsäuren erhältlich (siehe z.B. Tetrahedron 1967 Vol. 23, 2437-2441 und J. Am. Chem. Soc. 67 (1945) 2217-2218).

Die oxidative Polymerisation der 3,4-Dialkoxy-thiophene der Formel (II) wird je nach verwendetem Oxidationsmittel und gewünschter Reaktionszeit im allgemeinen bei Temperaturen von 20 bis +250 °C, bevorzugt bei Temperaturen von 20 bis 200 °C, vorgenommen.

Als Lösungsmittel für die Dialkoxythiophene der Formel (II) und/oder Oxidationsmittel seien vor allem folgende unter den Reaktionsbedingungen inerten organischen Lösungsmittel genannt: aliphatische Alkohole wie Methanol, Ethanol und i-Propanol; aliphatische Ketone wie Aceton und Methylethylketon; aliphatische Carbonsäureester wie Essigsäureethylester und Essigsäurebutylester; aromatische Kohlenwasserstoffe wie Toluol und Xylol; aliphatische Kohlenwasserstoffe wie Hexan, Heptan und Cyclohexan; Chlorkohlenwasserstoffe wie Dichlormethan und Dichlorethan; aliphatische Nitrile wie Acetonitril; aliphatische Sulfoxide und Sulfone wie Dimethylsulfoxid und Sulfolan; aliphatische Carbonsäureamide wie Methylacetamid und Dimethylformamid; aliphatische und araliphatische Ether wie Diethylether und Anisol. Weiterhin kann auch Wasser oder Gemische aus Wasser mit den vorgenannten organischen Lösungsmitteln als Lösungsmittel verwendet werden.

Als Oxidationsmittel werden die für die oxidative Polymerisation von Pyrrol geeigneten Oxidationsmittel verwendet werden; diese sind beispielsweise in J. Am. Chem. Soc. 85, 454 (1963) beschrieben. Bevorzugt sind aus praktischen Gründen preiswerte und leicht handhabbare Oxidationsmittel wie Eisen-III-Salze wie $FeCl_3$, $Fe(ClO_4)_3$ und die Eisen-III-Salze organischer Säuren und organische Reste aufweisender anorganischer Säuren, ferner $H_2O_2$, $K_2Cr_2O_7$, Alkali- und Ammoniumpersulfate, Alkaliperborate, Kaliumpermanganat und Kupfersalze, wie Kupfertetrafluoroborat.

Für die oxidative Polymerisation der Thiophene der Formel II werden theoretisch je Mol Thiophen 2,25 Äquivalente Oxidationsmittel benötigt (siehe z.B. J. Polym. Sc. Part A Polymer Chemistry Vol. 26, S. 1287 (1988)). Praktisch wird das Oxydationsmittel jedoch in einem gewissen Überschuß, z.B. einem Überschuß von 0,1 bis 2 Äquivalenten je Mol Thiophen angewendet.

Die Verwendung der Persulfate und der Eisen-III-salze organischer Säuren und der organische Reste aufweisenden anorganischen Säuren hat die großen anwendungstechnischen Vorteile, daß sie nicht korrosiv wirken und vor allem, daß mit ihnen die Oxidation der 3,4-disubstituierten Thiophene der Formel (II) so langsam verläuft, daß man Thiophene und Oxidationsmittel zusammen aus einer Lösung bzw. einer Druckpaste auf die Metallfolie aufbringen kann. Nach dem Aufbringen der Lösung bzw. der Paste läßt sich die Oxidation durch Erwärmen der beschichteten Metallfolie beschleunigen.

Mit den anderen vorstehend genannten Oxidationsmitteln wie $FeCl_3$, $H_2O_2$ oder Perboraten, verläuft die oxidative Polymerisation so schnell, so daß ein getrenntes Aufbringen von Oxidationsmittel und Thiophen auf das auszurüstende Substrat erforderlich, ein Erwärmen dagegen nicht mehr nötig ist.

Als Eisen-III-Salze organische Reste aufweisende anorganischer Säuren seien beispielsweise die Eisen-III-Salze der Schwefelsäurehalbester von $C_1$-$C_{20}$-Alkanolen, z.B. das Fe-III-Salz des Laurylsulfates genannt.

Als Eisen-III-Salze organischer Säuren seien beispielsweise genannt: die Fe-III-Salze von $C_1$-$C_{20}$-Alkylsulfonsäuren, wie der Methan- und der Dodecansulfonsäure; aliphatischen $C_1$-$C_{20}$-Carbonsäuren wie der 2-Ethylhexylcarbonsäure; aliphatischen Perfluorcarbonsäuren, wie der Trifluoressigsäure und der Perfluoroctansäure; aliphatischen Dicarbonsäuren, wie der Oxalsäure und vor allem von aromatischen, gegebenenfalls durch $C_1$-$C_{20}$-Alkylgruppen substituierten Sulfonsäuren wie der Benzolsulfonsäure, p-Toluolsulfonsäure und der Dodecylbenzolsulfonsäure.

Es können auch Gemische dieser vorgenannten Fe-III-Salze organischer Säuren eingesetzt werden.

Bei getrennter Aufbringung von 3,4-Dialkoxy-thiophenen der Formel (II) und Oxidationsmitteln werden die Metallfolien vorzugsweise zunächst mit der Lösung des Oxidationsmittels und anschließend mit der Lösung des 3,4-Dialkoxy-thiophens beschichtet. Bei der bevorzugten gemeinsamen Aufbringung von Thiophen und Oxidationsmittel werden die Metallfolien nur mit einer, nämlich einer Thiophen und Oxidationsmittel enthaltenden Lösung beschichtet. Da beim gemeinsamen Aufbringen ein Teil des Thiophens verdunstet, versetzt man die Lösungen bei dieser Arbeitsweise mit einer dem zu erwartenden Thiophen-Verlust enstsprechend geringeren Oxydationsmittel-Menge.

Die Lösungen können außerdem in organischen Lösungsmitteln lösliche organische Bindemittel enthalten, wie Polyvinylacetat, Polycarbonat, Polyvinylbutyrat, Polyacrylsäureester, Polymethacrylsäureester, Polystyrol, Polyacrylonitril, Polyvinylchlorid, Polybutadien, Polyisopren, Polyether, Polyester, Silicone und in organischen Lösungsmitteln lösliche Pyrrol/Acrylsäureester-, Vinylacetat/Acrylsäureester-und Ethylen/Vinylacetat-Copolymerisate. Auch in Wasser lösliche Bindemittel wie Polyvinylalkohole sind als Verdickungsmittel verwendbar.

Die auf die Metallfolie aufzubringenden Lösungen enthalten vorzugsweise 1 bis 30 Gew.-% des Thiophenderivats der Formel (II) und 0 bis 30 Gew.-% Bindemittel, beide Gewichtsprozente bezogen auf das Gesamtgewicht der Lösung.

Die Lösungen werden nach bekannten Verfahren, z.B. durch Aufsprühen, Aufrakeln, Bestreichen oder Bedrucken auf die Substrate aufgebracht.

Die Schichtdicke der aufgebrachten Beschichtung nach dem Trocknen beträgt in Abhängigkeit von der gewünschten Leitfähigkeit der Beschichtung im allgemeinen 1,0 bis 500 µm, vorzugsweise 10 bis 200 µm.

Das Entfernen der Lösungsmittel nach dem Aufbringen der Lösungen kann durch einfaches Abdampfen bei Raumtemperatur erfolgen. Zur Erzielung höherer Verarbeitungsgeschwindigkeiten ist es jedoch vorteilhafter, die Lösungsmittel bei erhöhten Temperaturen, z.B. bei Temperaturen von 20 bis zu 300 °C, bevorzugt 40 bis zu 250 °C, zu entfernen. Das Entfernen der Lösungsmittel bei erhöhter Temperatur ist auch deshalb vorteilhafter, weil gefunden wurde, daß sich die elektrische Leitfähigkeit der Beschichtung durch eine thermische Nachbehandlung der Beschichtungen bei Temperaturen von 50 bis 250 °C, vorzugsweise von 100 bis 200 °C, wesentlich, nämlich um bis zu einer Zehnerpotenz, erhöhen läßt. Die thermische Nachbehandlung kann unmittelbar mit dem Entfernen des Lösungsmittel verbunden oder aber auch in zeitlichem Abstand von der Fertigstellung der Beschichtung vorgenommen werden.

Die Dauer der Wärmebehandlung beträgt in Abhängigkeit von der Art des für die Beschichtung verwendeten Polymers 5 Sekunden bis 5 Minuten.

Die Wärmebehandlung kann z.B. in der Weise ausgeführt werden, daß man die beschichteten Metallfolien mit einer solchen Geschwindigkeit durch eine auf der gewünschten Temperatur befindliche Wärmekammer bewegt, so daß die gewünschte Verweilzeit bei der gewählten Temperatur erreicht wird, oder mit einer auf der gewünschten Temperatur befindlichen Heizplatte für fie gewünschte Verweilzeit in Kontakt bringt.

Nach dem Entfernen der Lösungsmittel (Trocknen) und vor der thermischen Nachbehandlung kann es vorteilhaft sein, das überschüssige Oxidationsmittel aus der Beschichtung mit Wasser auszuwaschen.

Die Erfindung betrifft ferner Elektrolyt-Kondensatoren gemäß Anspruch 8, die die aus den Struktureinheiten der Formel (I) aufgebauten Polythiophene als Feststoff-Elektrolyte enthalten. Solche Feststoff-Elektrolyt-Kondensatoren weisen folgenden Aufbau auf:

1. Schicht:
Folie eines oxidierbaren Metalls, z.B. Aluminium, Niob oder Tantal;
2. Schicht:
Oxidschicht des Metalls;
3. Schicht:
Polythiophen, das aus Struktureinheiten der Formel (I) aufgebaut ist; und gegebenenfalls
4. Schicht:
Kontakt, z.B. eine dünne Schicht aus den elektrischen Strom gut leitenden Stoffen wie Leitsilber, Kupfer oder rußgefülltem Lack.

## Beispiel 1

Es wurden etwa 30 mg (entsprechend einer Trockenschichtdicke von etwa 60 µm) einer Lösung von 2,0 g Eisen-III-p-toluolsulfonat, 0,5 g 3,4-Ethylendioxy-thiophen in 5 g eines 1:2-Aceton/Isopropanol-Gemisches auf eine formierte (= einseitig oxidierte) Aluminiumelektrode (Fläche etwa 1,3 x 1,3 $cm^2$) aufgetragen und das Lösungsmittel bei Raumtemperatur quantitativ entfernt. Die Polythiophenschicht wurde anschließend mit einem Kontakt aus Leitsilber versehen.

Die elektrischen Werte des so erhaltenen Kondensators (Kapazitäten bei hohen und niedrigen Frequenzen, tan δ-Werte (dielektrische Verschiebung) und Leckstrom) wurden mit dem Meßgerät "Digitalbrücke GR 1688" der Firma GenRad bestimmt. Die Werte sind in der auf die Beispiele folgenden Tabelle 1 angegeben.

Beispiel 2

Es wurde wie in Beispiel 1 beschrieben verfahren, mit dem Unterschied, daß die Polythiophenschicht nicht bei Raumtemperatur sondern bei 60 bis 70 °C getrocknet wurde.

Die elektrischen Werte des so erhaltenen Kondensators sind in Tabelle 1 angegeben.

Beispiel 3

Die Lösung aus 1,0 g Eisen-III-p-toluolsulfonat, 0,5 g 3,4-Ethylendioxy-thiophen in 5 g eines 1:2-Aceton/Isopropanol-Gemisches wurde wie in Beispiel 1 beschrieben auf eine formierte Aluminiumelektrode aufgebracht und bei Raumtemperatur getrocknet.

Die elektrischen Werte des so erhaltenen Kondensators sind in Tabelle 1 aufgeführt.

Beispiel 4

Es wurde wie in Beispiel 3 verfahren, mit dem Unterschied das die Beschichtung bei 60 °C getrocknet wurde.

Die elektrischen Werte des so erhaltenen Kondensators sind in Tabelle 1 angegeben.

Beispiel 5

Die Lösung von 1,5 g Eisen-III-p-toluolsulfonat und 0,5 g 3,4-Ethylendioxy-thiophen in 4 g Isopropanol wurde wie in Beispiel 1 beschrieben auf eine formierte Aluminiumelektrode aufgebracht und bei Raumtemperatur getrocknet.

Die elektrischen Werte des so erhaltenen Kondensators sind in Tabelle 1 angegeben.

Beispiel 6

Es wurde wie in Beispiel 5 beschrieben gearbeitet aber mit dem Unterschied, daß die Reste des zunächst bei Raumtemperatur entfernten Lösungsmittels durch 5 minütiges Erwärmen der beschichteten Folie auf 120 °C entfernt wurden.

Die elektrischen Werte des so erhaltenen Kondensators sind in Tabelle 1 angegeben.

Beispiel 7

Die Lösung von 1,0 g Eisen-III-methansulfonat und 0,5 g 3,4-Ethylendioxy-thiophen in 5 g eines 1:2-Aceton/Isopropanol-Gemisches wird wie in Beispiel 1 beschrieben auf eine formierte Aluminiumelektrode aufgebracht und das Lösungsmittel durch Erwärmen der beschichteten Metallfolie auf 60 °C entfernt.

Die elektrischen Werte des erhaltenen Kondensators sind in Tabelle 1 angegeben.

Beispiel 8

Es wurde wie in Beispiel 7 beschrieben verfahren mit dem Unterschied, daß das Lösungsmittel bei Raumtemperatur entfernt wurde.

Die elektrischen Werte des so erhaltenen Kondensators sind in Tabelle 1 angegeben.

Beispiel 9

Eine Lösung von 2,5 g Eisen-III-p-toluolsulfonat, 0,5 g 3,4-Ethylendioxy-thiophen und 1,25 g Polyvinylacetat in 25 g eines 1:1-Aceton/Isopropanol-Gemisches wird wie in Beispiel 1 beschrieben auf eine formierte Aluminium-Elektrode aufgetragen. Das Lösungsmittel wird bei Raumtemperatur entfernt.

Die elektrischen Werte des so erhaltenen Kondensators sind in Tabelle 1 aufgeführt.

Beispiel 10

Die Lösung von 0,5 g 3,4-Propylen-1,2-dioxy-thiophen und 1,0 g Eisen-III-toluolsulfonat in 5 g eines 1:2-Aceton/Isopropanol-Gemisches wurde, wie in Beispiel 1 beschrieben, auf eine formierte Aluminiumselektrode aufgebracht und 1 Stunde bei Raumtemperatur und 1 Stunde bei 60 °C getrocknet.

Die elektrischen Werte des so erhaltenen Kondensators sind in Tabelle 1 angegeben.

**Tabelle 1**

| Beispiel | Kapazität C [nF] bei 240 Hz | Kapazität C [nF] bei 20 KHz | tan δ (bei 240 Hz) | $C_{20 KHz}$/$C_{240 Hz}$ [%] | Leckstrom bei 5 V nach 30 Sek. [µA] |
|---|---|---|---|---|---|
| 1 | 421 | 401 | 0,01 | 95 | 0,2 |
| 2 | 559 | 503 | 0,02 | 90 | <0,1 |
| 3 | 502 | 465 | 0,018 | 93 | <0,1 |
| 4 | 625 | 574 | 0,018 | 92 | <0,1 |
| 5 | 436 | 404 | 0,01 | 93 | 0,1 |
| 6 | 470 | 438 | 0,017 | 93 | <0,1 |
| 7 | 502 | 478 | 0,01 | 95 | <0,1 |
| 8 | 475 | 462 | 0,009 | 97 | 0,1 |
| 9 | 442 | 306 | 0,1 | 69 | 0,7 |
| 10 | 528 | 503 | 0,013 | 95 | <0,1 |

## Patentansprüche

**1.** Verwendung von Polythiophenen, die aus Struktureinheiten der Formel

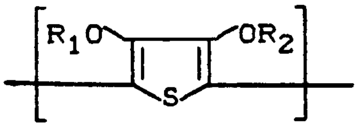

(I),

aufgebaut sind, in der

$R_1$ und $R_2$ zusammen einen gegebenenfalls substituierten $C_1$-$C_4$-Alkylen-Rest oder einen Cyclohexylen-1,2-Rest bilden,

als Feststoff-Elektrolyte in Elektrolyt-Kondensatoren.

**2.** Verwendung gemäß Anspruch 1, dadurch gekennzeichnet, daß $R_1$ und $R_2$ zusammen einen gegebenenfalls durch Alkylgruppen substituierten Methylen-, einen gegebenenfalls durch $C_1$-$C_{12}$-Alkyl- oder Phenylgruppen substituierten Ethylen-1,2-Rest oder einen Cyclohexylen-1,2-Rest bilden.

**3.** Verwendung gemäß Anspruch 1, dadurch gekennzeichnet, daß $R_1$ und $R_2$ zusammen einen Methylen-, Ethylen-1,2-oder Propylen-1,2-Rest bilden.

**4.** Verwendung gemäß Anspruch 1, 2 oder 3, wobei man die Polythiophene unmittelbar auf den in den Elektrolyt-Kondensatoren als Anoden verwendeten, einseitig mit einer Oxidschicht bedeckten Metallfolien, durch oxidative Polymerisation von 3,4-Dialkoxy-thiophenen der Formel

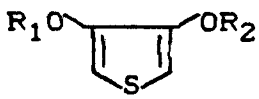

(II),

in der

$R_1$ und $R_2$ zusammen einen gegebenenfalls substituierten $C_1$-$C_4$-Alkylen-Rest, vorzugsweise einen gegebenenfalls durch Alkylgruppen substituierten Methylen-, einen gegebenenfalls durch $C_1$-$C_{12}$-Alkyl-oder Phenylgruppen substituierten Ethylen-1,2-Rest oder einen Cyclohexylen-1,2-Rest bilden,

erzeugt.

**5.** Verwendung gemäß Anspruch 4, wobei man die Polythiophene unmittelbar auf den Metallfolien durch oxidative Polymerisation der 3,4-Dialkoxy-thiophene erzeugt, indem man auf die mit der Oxidschicht bedeckte Seite der Metallfolie die Dialkoxythiophene der Formel (II) und die Oxidationsmittel, vorzugsweise in Form von Lösungen aufbringt und die oxidative Polymerisation gegebenenfalls durch ein Erwärmen der Beschichtung zu Ende führt.

**6.** Verwendung gemäß Anspruch 5, wobei man 3,4-Dialkoxythiophene der Formel (II) und Oxidationsmittel zusammen aufbringt.

**7.** Verwendung gemäß Anspruch 5, wobei man als Oxidationsmittel Alkali- oder Ammoniumpersulfate oder Eisen-III-salze organischer Säuren oder organische Reste aufweisender anorganischer Säuren verwendet.

**8.** Elektrolyt-Kondensatoren, die als Feststoff-Elektrolyte Polythiophene enthalten, dadurch gekennzeichnet, daß die Polythiophene aus Struktureinheiten der Formel

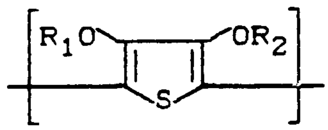

(I),

aufgebaut sind, in der

$R_1$ und $R_2$ zusammen einen gegebenenfalls substituierten $C_1$-$C_4$-Alkylen-Rest oder einen Cyclohexylen-1,2-Rest bilden.

## Claims

1. The use of polythiophenes made up of structural units corresponding to the formula

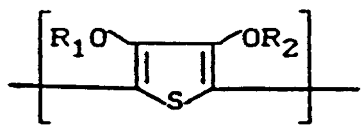

(I),

in which

$R_1$ and $R_2$ together form an optionally substituted $C_{1-4}$ alkylene radical or a 1,2-cyclohexylene radical,

as solid electrolytes in electrolyte capacitors.

2. The use claimed in claim 1, characterized in that $R_1$ and $R_2$ together form an optionally alkyl-substituted methylene radical, an optionally $C_{1-12}$ alkyl- or phenyl-substituted 1,2-ethylene radical or a 1,2-cyclohexylene radical.

3. The use claimed in claim 1, characterized in that $R_1$ and $R_2$ together form a methylene, 1,2-ethylene or 1,2-propylene radical.

4. The use claimed in claim 1, 2 or 3, wherein the polythiophenes are directly produced on the metal foils covered on one side with an oxide layer which are used as anodes in the electrolyte capacitors by oxidative polymerization of 3,4-dialkoxythiophenes corresponding to the formula

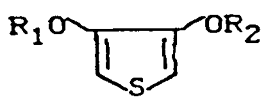

(II),

in which

$R_1$ and $R_2$ together form an optionally substituted $C_{1-4}$ alkylene radical, preferably an optionally alkyl-substituted methylene radical, an optionally $C_{1-12}$ alkyl- or phenyl-substituted 1,2-ethylene radical or a 1,2-cyclohexylene radical.

5. The use claimed in claim 4, wherein the polythiophenes are directly produced on the metal foils by oxidative polymerization of the 3,4-dialkoxythiophenes by applying the dialkoxythiophenes corresponding to formula (II) and the oxidizing agents, preferably in the form of solutions, to that side of the metal foil which is coated with the oxide layer and optionally completing the oxidative polymerization by heating the coating.

6. The use claimed in claim 5, wherein 3,4-dialkoxythiophenes corresponding to formula (II) and oxidizing agents are applied together.

7. The use claimed in claim 5, wherein alkali metal or ammonium persulfates or iron(III) salts of organic acids or of inorganic acids containing organic residues are used as the oxidizing agents.

8. Electrolyte capacitors containing polythiophenes as solid electrolytes, characterized in that the polythiophenes are made up of structural units corresponding to the formula

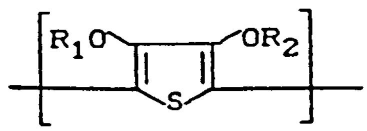

(I),

in which

$R_1$ and $R_2$ together form an optionally substituted $C_{1-4}$ alkylene radical or a 1,2-cyclohexylene radical.

**Revendications**

1. Mise en oeuvre de polythiophènes qui sont composés d'unités structurelles de formule

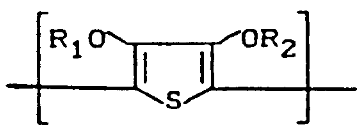

(I),

dans laquelle

$R_1$ et $R_2$ forment ensemble un radical alkylène $C_1$-$C_4$ éventuellement substitué ou un radical cyclohexylène-1,2,

comme électrolyte solide dans des condensateurs électrochimiques.

2. Mise en oeuvre selon la revendication 1 caractérisée en ce que $R_1$ et $R_2$ forment ensemble un radical méthylène éventuellement substitué par des radicaux alkyle, un radical éthylène-1,2 éventuellement substitué par des radicaux alkyle $C_1$-$C_{12}$ ou phényle ou un radical cyclohexylène-1,2.

3. Mise en oeuvre selon la revendication 1 caractérisée en ce que $R_1$ et $R_2$ forment ensemble un radical méthylène, éthylène-1,2 ou propylène-1,2.

4. Mise en oeuvre selon la revendication 1, 2 ou 3, les polythiophènes étant produits directement sur les feuilles métalliques enduites sur une seule face d'une couche d'oxyde et mises en oeuvre comme anodes dans les condensateurs électrochimiques par polymérisation par oxydation de 3,4-dialcoxythiophènes de formule

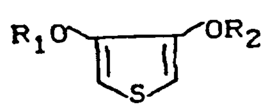

(II),

dans laquelle

$R_1$ et $R_2$ désignent un radical alkylène $C_1$-$C_4$ éventuellement substitué, de préférence un radical méthylène éventuellement substitué par des radicaux alkyle, un radical éthylène-1,2 éventuellement substitué par des radicaux alkyle $C_1$-$C_{12}$ ou phényle ou un radical cyclohexylène-1,2.

5. Mise en oeuvre selon la revendication 4, les polythiophènes étant produits directement sur les feuilles métalliques par polymérisation par oxydation des 3,4-dialcoxythiophènes en appliquant les dialcoxythiophènes de formule (II) et l'oxydant sur la face enduite de la couche d'oxyde de la feuille métallique, de préférence sous forme de solutions et la polymérisation par oxydation étant menée à bien éventuellement par un chauffage du revêtement.

6. Mise en oeuvre selon la revendication 5, les 3,4-dialcoxythiophènes de formule (II) et l'oxydant étant appliqués ensemble.

7. Mise en oeuvre selon la revendication 5, des persulfates de métaux alcalins ou d'ammonium ou des sels de fer (III) d'acides organiques ou d'acides inorganiques présentant des radicaux organiques étant utilisés comme oxydants.

8. Condensateurs électrochimiques qui contiennent des polythiophènes comme électrolytes solides caractérisés en ce que les polythiophènes se composent d'unités structurelles de formule

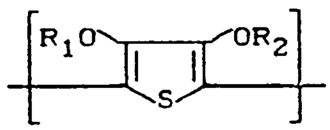 (I),

dans laquelle

R1 et R2 forment ensemble un radical alkylène $C_1$-$C_4$ éventuellement substitué ou un radical cyclohexylène-1,2.